# EUROPÄISCHE PATENTSCHRIFT

(11) **EP 3 640 022 B1**
(45) Veröffentlichungstag und Bekanntmachung des Hinweises auf die Patenterteilung: **04.12.2024**
(21) Anmeldenummer: 19203815.6
(22) Anmeldetag: 17.10.2019
(51) Int. Cl.: B32B 18/00, C04B 35/573, C04B 35/626, C04B 35/628, C04B 35/634, C04B 35/80

(54) **VERFAHREN ZUR HERSTELLUNG VON PREPREGS FÜR DIE HERSTELLUNG FASERVERSTÄRKTER KERAMIKBAUTEILE**
METHOD FOR PRODUCING PREPREGS FOR PRODUCING FIBRE-REINFORCED CERAMIC COMPONENTS
PROCÉDÉ DE FABRICATION DE PRÉIMPRÉGNÉS POUR LA FABRICATION DE COMPOSANTS CÉRAMIQUES RENFORCÉS PAR DES FIBRES

(30) Priorität: 17.10.2018 DE 102018125760
(43) Veröffentlichungstag der Anmeldung: 22.04.2020
(73) Patentinhaber: Fraunhofer-Gesellschaft zur Förderung der angewandten Forschung e.V., 80686 München (DE)
(72) Erfinder: Raether, Friedrich, 95448 Bayreuth (DE); Schmidt, Jens, 95448 Bayreuth (DE); Vogt, Joachim, 95448 Bayreuth (DE)
(74) Vertreter: Pfenning, Meinig & Partner mbB

(56) Entgegenhaltungen:
- DE-A1- 10 008 686
- DE-A1- 102005 037 108
- DE-B4- 10 008 686
- US-A1- 2013 287 941
- US-A1- 2017 183 268
- US-A1- 2018 155 252

## Beschreibung

Die vorliegende Erfindung betrifft ein Verfahren zur Herstellung von Prepregs für die Herstellung faserverstärkter Keramikbauteile, bei welchem ein Schlicker hergestellt wird, eine Faserpreform mit dem hergestellten Schlicker imprägniert wird, und die mit dem Schlicker imprägnierte Faserpreform einem Gefriertrocknungsprozess unterzogen wird. Erfindungsgemäß enthält der Schlicker anorganische Feststoffpartikel, mindestens einen wasserlöslichen Primärbinder, mindestens einen wasserunlöslichen Sekundärbinder und/oder mindestens eine wasserunlösliche Siliciumquelle, und Wasser. Die anorganischen Feststoffpartikel bilden mit dem mindestens einen wasserunlöslichen Sekundärbinder und/oder der mindestens einen wasserunlöslichen Silicium-quelle ein Gelnetzwerk aus. Zudem betrifft die vorliegende Erfindung auch ein mit dem erfindungsgemäßen Verfahren zur Herstellung von Prepregs herstellbares Prepreg sowie ein Verfahren zur Herstellung faserverstärkter Keramikbauteile, bei welchem ein mit dem erfindungsgemäßen Verfahren zur Herstellung von Preprges hergestelltes Prepreg mit Siliciumschmelze infiltriert wird.

Ceramic Matrix Composites (CMC) bestehen aus Verstärkungsfasern und einer keramischen Matrix. Als Fasern werden Carbonfasern und Keramikfasern eingesetzt, die sowohl oxidisch als auch nicht-oxidisch sein können. Für den Matrixaufbau kommen Gas- (chemical vapour infiltration = CVI), Flüssig- (polymer infiltration = PI) und Schmelzinfiltrationen (melt infiltration = Ml) zum Einsatz. CMC-Bauteile mit Keramikfaserverstärkung können u.a. in Gasturbinen bei hohen Temperaturen> 1000 °C im Heißgaspfad eingesetzt werden.

Für die Herstellung von CMC-Bauteilen werden textile Halbzeuge eingesetzt, sog. Faserpreformen bzw. Prepregs, die aus Rovings, UD-Bändern, oder meist 2D-Gewebelagen aufgebaut sind. Es sind am Markt auch textile Halbzeuge mit 2,5D- bis 3D-Verstärkung verfügbar. Im letzteren Fall sind die Faserlagen durch einzelne Fäden (Rovings) in z-Richtung miteinander vernäht, vernadelt oder getuftet. In der Regel werden CMC-Bauteile durch Stapeln von einzelnen Gewebelagen aufgebaut, und die Faserorientierungen durch gezielte Faserablage eingestellt.

Zusätzlich werden Faserbeschichtungen (Fasercoatings) eingesetzt, um einerseits bei hohen Temperaturen einen Schutz der Fasern vor Oxidation zu gewährleisten, und des Weiteren ein Gleiten der Fasern bei Biegebeanspruchung zu ermöglichen. Letzteres stellt eine Grundvoraussetzung für das für CMCs charakteristische schadenstolerante Bruchverhalten dar, welches sich in einem duktilen Bruchverhalten mit hoher Bruchdehnung im Spannungs-Dehnungsdiagramm widerspiegelt Für SiC-Fasern haben sich Schutzschichten aus Pyrokohlenstoff (PyC), Bornitrid (BN), Siliciumcarbid (SiC) und Siliziumnitrid (Si₃N₄) bewährt. Für einen ausreichenden Faserschutz bei SiC-Keramikfasern werden meist Doppelschichten aus BN/SiC oder BN/Si₃N₄ eingesetzt, die auch an Luft oder in Verbrennungsatmosphären (z.B. Wasserdampf) beständig sind.

Der Aufbau der primären Matrix erfolgt über das Imprägnieren von Faserpreformen mit präkeramischen Harzen oder partikelhaltigen Schlickern durch Einrakeln, Überdruck oder Vakuum. Hierfür werden u.a. Bindemittel wie Epoxid- oder Phenolharze verwendet, die nach dem Aushärten und thermischer Behandlung durch Pyrolyse unter Schutzgas eine Kohlenstoffmatrix bilden. Alternativ können partikelbeladene Schlicker (Suspensionen) verwendet werden, die u.a. Metallcarbide oder Kohlenstoff in unterschiedlicher Kornverteilung beinhalten. Nach der Härtung bzw. Trocknung der matrixbildenden Materialien erhält man einen sog. Prepreg, d.h. ein mit Matrixmaterial vorimprägniertes textiles Halbzeug.

Die Pyrolyse kohlenstoffbildender Harze bzw. das Abdampfen des Lösemittels der partikelhaltigen Schlicker hinterlässt in dem Prepreg ein gewisses Maß an offener Porosität. Diese kann mit Metallschmelzen, z.B. Silicium oder Si-Legierungen infiltriert werden, um zu einem dichten CMC mit niedriger Porosität zu gelangen. Hierbei reagiert der Kohlenstoffanteil, d.h. pyrolysierte kohlenstoffhaltige Binderanteile und/oder Kohlenstoff-Partikel, zu SiC. Auf diese Weise kann ein SiC/SiC-Werkstoff und Bauteil hergestellt werden, in welchem SiC-Fasern in eine kohlenstofffreie Mischmatrix aus freiem Silicium (Überschuss in den Zwickeln) und SiC eingebettet sind. Idealerweise werden hierbei hohe SiC-Matrixanteile erzielt.

Die bislang verwendeten und oben genannten Herstellrouten haben den Nachteil, dass durch sich aufbauende Gasdrücke und den Volumenschwund der Matrix im Zuge der Pyrolyse (Harzsysteme) oder Trocknung (Suspensionen) Spannungen im Prepreg entstehen, die zu Rissen in der Matrix führen. Diese werden im Zuge der Flüssigsilizierung zwar mit Silicium aufgefüllt, jedoch resultiert dies stets in einem unvermeidbaren Anteil an unerwünschtem, nicht abreagiertem Restsilicium in dem fertigen Komposit, sowie einer Beeinträchtigung der mechanischen Stabilität.

Bereits bekannte Ansätze zur Minimierung der Rissbildung sind im Folgenden dargestellt:
In EP 2 995 597 A1 wird die Herstellung einer verstärkten Faserpreform durch die Infiltration einer Preform mit einer Suspension aus Carbon Nanotubes (CNT) mit nachfolgender Gefriertrocknung vorgeschlagen. Hierfür wird zunächst eine Faserpreform mit einer wässrigen Suspension beaufschlagt, die einen Binder (PVA, PVP, PEI, Phenol und andere) und CNT enthält. Durch das Einfrieren expandiert das Wasservolumen und die CNT-Fasern werden in der Preform separiert bzw. verteilt und an die Fasern gebunden, während die Fasern im Faserbündel gespreizt werden. Nach dem Einfrieren mittels flüssigem Stickstoff oder Trockeneis wird der Prepreg gefriergetrocknet. Die nachfolgenden, möglichen Herstellschritte zur Weiterbehandlung der steifen, mit CNT stabilisierten Faserpreform umfassen Schlickergießen, CVI, PI sowie MI. Durch eine thermische Behandlung unter Einsatz eines Bor- oder SiO₂-haltigen Precursors werden die CNT in SiC- oder Bornitrid-Nanotubes umgewandelt. Durch die Quervernadelung durch die CNT können die out-of-plane Eigenschaften der CMC verbessert werden. Der Nachteil dieser Methode besteht in der Notwendigkeit zu einem zusätzlichen Infiltrationsschritt für den Aufbau der eigentlichen Matrix, zu dessen rissfreiem Aufbau wiederum in diesem Patent kein Konzept vorgestellt wird.

In US 2013/0287941 A1 wird ein Verfahren zur Herstellung einer SiC-haltigen Matrix beschrieben, die sich mittels Siliciumschmelzphaseninfiltration infiltrieren lässt. Der Schlicker, der die Matrix bildet, besteht mindestens aus einem kohlenstoffhaltigen Binder (z.B. Phenole, Epoxidharze, Polyester) und SiC-Partikeln mit einem Volumenanteil von 45-80 Vol.-%. Nach der thermischen Behandlung liegen SiC-Partikel, eine offene Porosität (> 20 Vol-%) und fein verteilte Kohlenstoffrückstände mit 9,5-25 Vol.-% (Binderanteil) in der Matrix vor. Dabei bildet der Kohlenstoffrückstand des Binders (carbon char) eine netzartige Struktur aus, die sich in SiC umsetzen lässt. Der Einsatz von Carbonpartikeln wie z.B. Rußpartikel in der Matrix wird bewusst vermieden, da in dieser Struktur die kleinen Poren durch SiC-Bildung während der Infiltration verstopft werden und sich somit das flüssige Silicium nicht mehr ausreichend in das Innere des Probenvolumens infiltrieren lässt. Eine zweite Organikkomponente wird in Form eines Katalysators, eines Additivs zur Verbesserung der Fließeigenschaften der Suspension, und/oder Porenbildners (z.B. PMMA, PVB) hinzugefügt. Letzterer fungiert zusätzlich als Binder, und verbessert die Imprägnierbarkeit mit Si-Schmelzen durch die Bereitstellung von offener Porosität. Das beschriebene Verfahren verwendet organische Harzsysteme zum Matrixaufbau, weswegen dieses Verfahren in der praktischen Umsetzung mit der stoffbedingten Einhaltung von Sicherheitsvorkehrungen, sowie einem hohen Aufwand zur Reinigung (wiederum sind hier Lösemittel nötig) und Entsorgung verbunden ist. Ferner wird nicht erwähnt, wie hoch die Viskosität der entstehenden, hochgefüllten Harzsysteme ist, und wie hoch dementsprechend die Güte der Infiltration in die Faserzwischenräume ist.

In EP 3 000 797 A1 wird die Herstellung von einem CMC durch die Infiltration einer Faserpreform mit einem wässrigen Schlicker vorgeschlagen, der Geliermittel (Monomer) sowie Partikel aus Kohlenstoff und SiC (0 < 50 µm) enthält. Das Gelieren (Polymerisation) findet durch Temperaturerhöhung auf 30-80 °C statt. Als Geliermittel werden u.a. Polysaccharide und Acrylate eingesetzt, die durch Quervernetzer zusätzlich stabilisiert werden können. Durch das Gel sollen die Partikel in der Faserpreform festgehalten werden. Der Gelanteil beträgt ca. < 1 Gew.-%. Die Trocknung findet regulär bei Normaldruck und einer Temperatur von bis zu 150 °C statt. Da bei diesem Verfahren regulär getrocknet wird, resultiert dies in einer Trocknungsschwindung der Matrix, was in dem starren Fasergerüst in den Preforms zu Trocknungsrissen führt.

In der DE 100 08 686 A1 wird ein Verfahren zur Herstellung von faserverstärktem Siliziumcarbid-Verbundstoff beschrieben. Der erhaltene Verbundstoff weist eine hohe Zähigkeit auf, wobei Bündel von Verstärkungsfasern dicht mit einem glasigen Kohlenstoff, der aus einem Harz abgeleitet ist, abgedeckt sind, um eine Beeinträchtigung der Festigkeit zu vermeiden.

Die US 2017/183268 A1 ist gerichtet auf ein Verfahren zur Herstellung von Verbundwerkstoffartikeln mit keramischer Matrix. Das Verfahren umfasst das Imprägnieren einer anorganischen Faservorform mit einer Aufschlämmungszusammensetzung. Die Aufschlämmungszusammensetzung enthält ein teilchenförmiges Material, ein Lösungsmittel und ein Vorgeliermittel. Die Gelierung des Vorgeliermittels in der Aufschlämmungszusammensetzung wird eingeleitet, um die Partikel zu immobilisieren und einen gelierten Gegenstand zu erhalten, und aus dem gelierten Gegenstand wird im Wesentlichen das gesamte Lösungsmittel entfernt, um einen Verbundstoffartikelgrünling zu bilden. Der Verbundstoffartikelgrünling wird dann mit einem geschmolzenen Infiltrationsmittel infiltriert, um den Verbundgegenstand zu bilden.

Die US 2018/155252 A1 betrifft ein Verfahren zur Herstellung eines Verbundwerkstoffs mit keramischer Matrix. Eine Faservorform kann in eine Form gelegt werden. Der Faservorform kann eine wässrige Lösung zugesetzt werden. Die wässrige Lösung kann Wasser, Kohlenstoff-Nanoröhrchen und ein Bindemittel enthalten. Der Vorformling kann gefroren werden. Das Einfrieren der Vorform kann dazu führen, dass sich das Wasser ausdehnt und die Fasern in der Faservorform trennt. Die Kohlenstoff-Nanoröhrchen können sich mit den Fasern verbinden. Der Vorformling kann gefriergetrocknet werden, um das Wasser zu entfernen. Die Vorform kann dann nach dem Standard-CMC-Verfahren verarbeitet werden.

In der DE 10 2005 037108 A1 wird ein Verfahren zur Herstellung von Keramik-Matrix-Verbundstoffen unter Verwendung einer Prepreg Gießmasse auf Wasserbasis beschrieben. Das Verfahren beinhaltet das Aufbringen einer Faserbeschichtung auf ein Faserkabel durch chemische Abscheidung aus der Gas- oder Dampfphase; das Durchziehen des Faserkabels durch eine wässrige Gießmasse, die zusammengesetzt ist aus Hoch- und Niedertemperaturbindemitteln, Siliziumkarbidpulver, Ruß und Wasser, um ein Prepreg-Band zu erzeugen; und das Aufwickeln des Prepreg-Bandes auf eine Trommel.

Die Gefriertrocknung von wasserbasierten Schlickersystemen stellt eine Möglichkeit dar, hochporöse Grün-Matrizes bzw. Prepregs herzustellen, die durch einen Nachinfiltrationsschritt bzw. reaktive Infiltration in ein dichtes, homogenes keramisches Matrixmaterial überführt werden können. Derartig prozessierte Prepregs sind nach der Gefriertrocknung jedoch extrem fragil. Für die Verarbeitung zu geometrisch komplexen Bauteilen wird jedoch eine stabile, biegsame und schadenstolerante Matrix zwischen den Faserlagen benötigt, damit beim Handling Fehler wie Mikrorisse, Delaminationen, Partikel- oder Faserumverteilung oder Partikelverlust vermieden werden. Eine endkonturnahe Infiltration von komplexen Preform-Laminaten mit einem Schlicker inkl. anschließendem Gefriertrocknungsschritt ist nicht praktikabel, da die Ausprägung entstehender Eiskristalle und damit das Gefüge der Matrix in komplexer Weise von Faktoren wie der Bauteilgeometrie, bzw. Wandstärken, sowie dem Wärmeabfluss und Gefrierraten bei dem Gefrieren abhängt. Daher müssen die Matrixmaterialien in den Prepregs zusätzlich stabilisiert werden.

Ausgehend hiervon ist es somit die Aufgabe der vorliegenden Erfindung ein einfaches und umweltfreundliches Verfahren zur Herstellung hochporöser Prepregs für die Herstellung faserverstärkter Keramikbauteile anzugeben, durch welches stabile, flexible Faserpreformen erhalten werden, die anschließend durch Infiltration so weiterverarbeitet werden können, dass ein dichtes, homogenes keramisches Matrixmaterial erhalten wird, ohne dass die bei der Herstellung des Prepregs erzielte Mikrostruktur durch Faser- oder Kornumverteilung gestört wird.

Diese Aufgabe wird bezüglich eines Verfahrens zur Herstellung von Prepregs für die Herstellung faserverstärkter Keramikbauteile mit den Merkmalen des Anspruchs 1, bezüglich eines Prepregs für die Herstellung faserverstärkter Keramikbauteile mit den Merkmalen des Anspruchs 11 und bezüglich eines Verfahrens zur Herstellung eines faserverstärkten Keramikbauteils mit den Merkmalen des Anspruchs 12 gelöst. Die jeweilig abhängigen Patentansprüche stellen dabei vorteilhafte Weiterbildungen dar.

Erfindungsgemäß wird somit ein Verfahren zur Herstellung eines Prepregs angegeben, bei welchem
a) ein Schlicker hergestellt wird, welcher
   i) anorganische Feststoffpartikel,
   ii) mindestens einen wasserlöslichen Primärbinder,
   iii) mindestens einen wasserunlöslichen Sekundärbinder und/oder mindestens eine wasserunlösliche Siliciumquelle, und
   iv) Wasser
   enthält, wobei die anorganischen Feststoffpartikel mit dem mindestens einen wasserunlöslichen Sekundärbinder und/oder der mindestens einen wasserunlöslichen Siliciumquelle ein Gelnetzwerk ausbilden,
b) eine Faserpreform mit dem hergestellten Schlicker imprägniert bzw. infiltriert wird, und
c) die mit dem Schlicker imprägnierte bzw. infiltrierte Faserpreform einem Gefriertrocknungsprozess unterzogen wird.

In Schritt a) des erfindungsgemäßen Verfahrens wird somit zunächst ein die Komponenten i) bis iv) enthaltener Schlicker hergestellt. Als Komponente i) können prinzipiell beliebige anorganische Feststoffpartikel dergleichen Sorte oder verschiedener Sorten eingesetzt werden. Vorzugsweise werden Kohlenstoff-haltige Feststoffpartikel eingesetzt, wie z.B. Kohlenstoff-Feststoffpartikel, Metallcarbid-Feststoffpartikel oder Mischungen hiervon. Zusätzlich zur den Kohlenstoff-haltigen Feststoffpartikeln kann der Schlicker in diesem Fall auch noch weitere Feststoffpartikel, wie z.B. Metallnitrid-Feststoffpartikel und Metallborid-Feststoffpartikel enthalten. Bei Komponente ii) handelt es sich um einen wasserlöslichen Primärbinder. Hierunter wird ein Bindemittel verstanden, welches in Wasser löslich ist, also beispielsweise Polyvinylalkohol oder Polyethylenglycol. Bei Komponente iii) handelt es sich um einen wasserunlöslichen Sekundärbinder und/oder um eine wasserunlösliche Siliciumquelle. Unter einem wasserunlöslichen Sekundärbinder wird ein Bindemittel verstanden, welches in Wasser unlöslich ist, also beispielsweise ein Phenolharz oder ein Epoxidharz. Unter einer wasserunlöslichen Siliciumquelle wird eine Silicium-enthaltende Verbindung verstanden, die nicht in Wasser löslich ist, also beispielsweise ein Silazanharz. Als Komponente iv) wird Wasser verwendet. Vorzugsweise besteht der in Schritt a) hergestellte Schlicker aus den Komponenten i) bis iv).

Vorzugsweise enthält der in Schritt a) hergestellte Schlicker zusätzlich zu den Komponenten i) bis iv) mindestens ein Dispergierhilfsmittel und/oder mindestens ein Tensid.

Somit ist es bevorzugt, dass in Schritt a) ein Schlicker hergestellt wird, welcher
i) anorganische Feststoffpartikel,
ii) mindestens einen wasserlöslichen Primärbinder,
iii) mindestens einen wasserunlöslichen Sekundärbinder und/oder mindestens eine wasserunlösliche Siliciumquelle,
iv) Wasser, und
v) mindestens ein Dispergierhilfsmittel und/oder mindestens ein Tensid,
enthält, wobei die anorganischen Feststoffpartikel mit dem mindestens einen wasserunlöslichen Sekundärbinder und/oder der mindestens einen wasserunlöslichen Siliciumquelle ein Gelnetzwerk ausbilden.

Vorzugsweise besteht der in Schritt a) hergestellte Schlicker aus den Komponenten i) bis v).

Durch die Verwendung des mindestens einen Dispergierhilfsmittels im hergestellten Schlicker kann verhindert werden, dass der Schlicker mit Agglomeraten behaftet ist, was zu einer verbesserten Funktionalität des Schlickers führt. Durch die Verwendung des mindestens einen Tensids im hergestellten Schlicker kann Entmischungen im Schlicker vorgebeugt werden, was ebenfalls zu einer verbesserten Funktionalität des Schlickers führt.

Das mindestens eine Dispergierhilfsmittel ist vorzugsweise ausgewählt aus der Gruppe bestehend aus Aminoalkoholen, Fettsäuren, Carbonsäurederivaten, Phosphaten, Sulfaten, Acrylaten, Polymeren, (synthetischen) Polyelektrolyten mit pigmentaffinen Gruppen (zur sterischen und/oder elektrosterischen Stabilisierung), sowie Mischungen hiervon.

Das mindestens eine Tensid ist vorzugsweise ausgewählt aus der Gruppe bestehend aus Ammonium-Laurylsulfat, Stearinsäure, Polyoxyethylen(12)-tridecyl-ether, PEG-18, sowie Mischungen hiervon. Das mindestestens eine Tenside weist bevorzugt einen HLB-Wert von 3 bis 18 auf.

Das Zusammenfügen der Komponenten des Schlickers kann prinzipiell in beliebiger Reihenfolge erfolgen. Es ist jedoch bevorzugt, wenn zunächst eine Suspension hergestellt wird, die die Feststoffpartikel; den wasserlöslichen Primärbinder; vorzugsweise das gegebenenfalls verwendete Dispergierhilfsmittel; und das Wasser enthält und anschließend der wasserunlösliche Sekundärbinder und/oder die wasserunlösliche Siliciumquelle zu der hergestellten Suspension gegeben wird, wobei danach vorzugsweise das gegebenenfalls verwendete Tensid zugegeben wird. Zudem ist es bevorzugt, wenn zunächst eine Suspension hergestellt wird, die die Feststoffpartikel; den wasserunlöslichen Primärbinder und/oder die wasserunlösliche Siliciumquelle; vorzugsweise das gegebenenfalls verwendete Dispergierhilfsmittel; und das Wasser enthält und anschließend der wasserlösliche Primärbinder zu der hergestellten Suspension gegeben wird, wobei danach vorzugsweise das gegebenenfalls verwendete Tensid zugegeben wird. Durch die Zugabe des Tensids kann die Stabilität des Schlickers erhöht werden.

Während der Herstellung des Schlickers bilden die anorganischen Feststoffpartikel mit dem mindestens einen wasserunlöslichen Sekundärbinder und/oder der mindestens einen wasserunlöslichen Siliciumquelle ein Gelnetzwerk aus. Die Gelnetzwerkbildung erfolgt bereits bei der Schlickerherstellung, und damit zumindest teilweise vor dem Imprägnieren der Faserpreform mit dem Schlicker. Sobald der wasserunlösliche Sekundärbinder mit den anorganischen Feststoffpartikeln im Wasser in Kontakt kommt, werden die anorganischen Feststoffpartikel vom wasserunlöslichen Sekundärbinder benetzt und untereinander vernetzt. Der Schlicker hat dadurch entsprechend eine Fließgrenze, jedoch ein scherverdünnendes Fließverhalten, was dennoch die Infiltration von Fasergeweben, also auch die Infiltration der Faserpreform in Schritt b), ermöglicht. Die Gelnetzwerkbildung muss nicht vor Beginn von Schritt b), d.h. vor dem Imprägnieren der Faserpreform, abgeschlossen sein, sondern kann sich auch während Schritt b) und nach Schritt b), also während und nach dem Imprägnieren der Faserpreform, fortsetzen.

In Schritt b) wird eine Faserpreform mit dem in Schritt a) hergestellten Schlicker imprägniert bzw. infiltriert. Hierbei dringt der Schlicker in die Faserpreform ein, wobei eine mit dem Schlicker imprägnierte bzw. infiltrierte Faserpreform erhalten wird. Das Imprägnieren bzw. Infiltrieren der Faserpreform mit dem Schlicker kann gemäß einer der dem Fachmann bekannten Methoden erfolgen. Durch die Ausbildung des Gelnetzwerks weist der Schlicker eine Fließgrenze auf, durch welche der Schlicker in der Faserpreform zumindest teilweise fixiert wird. Auf diese Weise werden das Auslaufen des Schlickers sowie auch die Sedimentation der Partikel erschwert bzw. verhindert. Als Faserpreform können beispielsweise Rovings oder Textilien wie Bänder verwendet werden, die eine Faservorzugsrichtung aufweisen.

Vorzugsweise wird die Faserpreform in Schritt b) auf einem Formwerkzeug abgelegt, wobei dies vor, während und/oder nach dem Imprägnieren der Faserpreform mit hergestellten Schlicker erfolgen kann. Zudem ist es bevorzugt, dass die Faserpreform vor, während und/oder nach dem Imprägnieren mit dem hergestellten Schlicker in beliebigen Kombinationen zugeschnitten, perforiert, ausgestanzt, und/oder gestapelt wird.

Somit ist es bevorzugt, dass in Schritt b) eine Faserpreform auf einem Formwerkzeug abgelegt, mit dem hergestellten Schlicker imprägniert und vorzugsweise hiervor oder hiernach in beliebigen Kombinationen zugeschnitten, perforiert, ausgestanzt, und/oder gestapelt wird.

Die Faserpreformen können wahlweise vor, nach oder zwischen dem Imprägnierschritt b) auf einem beliebigen Formgebungswerkzeug wie etwa einem Kern abgelegt werden, welcher auch bereits eine endkonturnahe Form besitzen kann. Die Preformen können ferner vor, nach oder zwischen dem Ablegen zugeschnitten und/oder perforiert und/oder ausgestanzt werden.

Der Kern kann als Positiv- (konvex) oder Negativform (konkav) ausgebildet sein und aus Metall, Keramik, Graphit bzw. kohlenfaserverstärktem Kohlenstoff (CFC) bestehen. Ferner können die Faserpreformen auf dem Formgebungswerkzeug in beliebiger Faserorientierung und Wandstärke abgelegt werden. Nicht umgeformte Faserpreformen ergeben Platten, die auf einem ebenen Kern abgelegt werden. Durch Kerne umgeformte Faserpreformen besitzen Krümmungsradien.

In Schritt c) wird die in Schritt b) erhaltene mit dem Schlicker imprägnierte Faserpreform schließlich einem Gefriertrocknungsprozess unterzogen. Hierbei wird das Wasser aus der mit dem Schlicker imprägnierten Faserpreform entfernt, wodurch ein Prepreg für die Herstellung faserverstärkter Keramikbauteile erhalten wird. Der Gefriertrocknungsprozess kann über einen gewissen Zeitraum, z.B. über einen Zeitraum von 24 Stunden bis 48 Stunden, bei einem unter Normaldruck liegendem Druck, z.B. bei 2 · 10⁻³ mbar bis 3 · 10⁻³ mbar, und bei Temperaturen unterhalb des Gefrierpunkts des Schlickers, z.B. bei Temperaturen unter -40 °C, erfolgen.

Die Gefriertrocknung von wasserbasierten Schlickersystemen stellt eine Möglichkeit dar, auf einfache umweltfreundliche Weise und schwindungsfrei hochporöse Grün-Matrizes herzustellen, die durch einen Nachinfiltrationsschritt bzw. reaktive Infiltration in ein dichtes, homogenes keramisches Matrixmaterial überführt werden können. Die Matrix bleibt in diesem Falle rissfrei, da das Wassereis ohne Kapillarkräfte spannungs- und schwindungsfrei absublimiert wird, und dadurch kein Volumenschwund entsteht. Sich bildende Eiskristalle können durch die Abkühlgeschwindigkeit sowie den Zusatz von Frostschutzmitteln wie z.B. Ethylenglycol oder weiteren organischen Zusätzen kontrolliert und in ihrer räumlichen Ausdehnung minimiert werden, wodurch eine durch Eiskristalle verursachte Ausbildung von ausgedehnten dendritischen Poren in der Matrix vermieden werden kann. Somit ist es möglich, ein homogenes, poröses Gefüge darzustellen.

Nach dem Gefriertrocknungsprozess verbleiben wasserlösliche Bindersysteme zum Großteil in den Hohlräumen zwischen den Partikeln, weswegen durch deren alleinige Verwendung keine schadenstolerante Matrix zwischen den Fasern erreicht werden kann. Aus diesem Grunde wird erfindungsgemäß für die Herstellung gefriergetrockneter Prepregs mit biegsamen Matrixeigenschaften ein organischer Binder, d.h. ein wasserunlöslicher Sekundärbinder, verwendet, der nach der Gefriertrocknung in den Kontaktpunkten zwischen den Matrixpartikeln sitzt. Alternativ ist eine Umverteilung des Binders nach abgeschlossener Gefriertrocknung denkbar. Wichtig ist die Mikrostruktur, bei der der Binder im Partikelkontakt der anorganischen Partikel sitzt.

Bei dem erfindungsgemäß verwendeten Schlicker mit den Komponenten i) bis iv) handelt es sich um eine kapillar wirkende Suspension. Diese besteht aus einer flüssigen Phase (inkl. löslichem Binder), in der Partikel dispergiert sind, sowie einer zweiten flüssigen Phase, die in der ersten Phase unlöslich ist. Kapillare Suspensionen haben die Eigenschaft, dass sich die unlösliche Phase zwischen den Partikeln anlagert, und diese miteinander verbindet, sodass diese ein Netzwerk bilden. Die zweite Phase muss die Eigenschaft besitzen, auch nach der Entfernung des Wassers eine ausreichend hohe Bindung zwischen den Matrixpartikeln und den Fasern zu gewährleisten, daher eignen sich hierfür wasserunlösliche, flüssige Bindersysteme. Die zwischen den Partikeln als Binder fungierende zweite Phase sorgt für Stabilität und gleichzeitig Biegsamkeit der nach dem Gefriertrockenen wasserfreien Preform. Auf diese Weise können umformbare Prepreg-Einzellagen, aber auch flexible Faserpreformen erzielt werden.

Ausgangsmaterialien für die Herstellung der Prepregs, wie z.B. von SiC/SiC-Faserprepregs, sind wässrige Schlicker und Faserpreformen. Die Schlicker enthalten mindestens Wasser als Suspensionmedium, Feststoffpartikel aus Kohlenstoff und/oder Metallcarbiden/-nitriden/-boriden sowie einen wasserlöslichen Primärbinder. Die Partikelgrößen sind bevorzugt < 20 µm, besonders bevorzugt < 1 µm, um mit der erfindungsmäßigen Suspension eine ausreichend hohe Bündelinfiltration zu erzielen. Die Viskositäten der Schlicker können hierbei idealerweise zwischen 100 - 2000 mPas (Scherrate 100 s⁻¹) eingestellt werden. Mit dem Schlicker können 1D-3D Faserpreformen imprägniert werden. Bevorzugt sind Rovings oder Textilien wie Bänder, die eine Faservorzugsrichtung aufweisen. In solche Preformen können die Schlicker homogen eindringen, da keine oder nur wenige Kreuzungspunkte vorhanden sind und damit Abschattungen vermieden werden.

Wie oben erwähnt sind zwei unterschiedliche Bindertypen nötig, um eine stabile und flexible Faserpreform zu erzeugen. Der erste Binder, d.h. der Primärbinder, ist wasserlöslich, beispielsweise Polyvinylalkohol (PVA), Polyethylenglykol (PEG), Polyvinylbutyral (PVB), Acrylate, und ähnliches. Auch Latexbinder können verwendet werden. Mit diesem Binder, Wasser und Matrixpartikeln kann eine Suspension erzeugt werden. Der zweite Binder, d.h. der Sekundärbinder, ist wasserunlöslich, z.B. Phenolharz, Furanharz, Epoxidharz, Polyesterharz, oder ähnliches, und kann darauf folgend hinzugegeben werden. Hierdurch entsteht ein Dreiphasensystem. Die einzelnen Partikel werden untereinander durch den nicht wasserlöslichen Binder benetzt und bilden somit ein Gelnetzwerk vorzugsweise durch das gesamte Schlickervolumen. Hierdurch wird in dem Schlicker eine Fließgrenze aufgebaut, welche den Schlicker fixiert, d.h. das Auslaufen des Schlickers aus der Preform verhindert und ferner die Sedimentation der Partikel verhindert. Somit kann ein homogen aufgebautes Matrixnetzwerk in der Faserpreform erzielt werden.

Der Anteil des nichtlöslichen Binders beträgt vorzugsweise < 10 Vol.-%, besonders bevorzugt < 1 Vol.-%. Durch den Sekundärbinderanteil ist ferner eine Beeinflussung der Porengrößen und der Porenverteilung möglich. Die Porengrößen steigen mit Zunahme des Sekundärbinderanteils, da die Netzwerksbildung (durch Ausflocken) voranschreitet, bis es zu einer Agglomeration der Primärpartikel kommt. Eine solche Agglomeration ist aber nicht erwünscht, da diese zur Inhomogenität der Matrix beiträgt und Partikelansammlungen bei der Si-Schmelzphaseninfiltration nicht ausreichend infiltriert werden. Durch das Gefriertrocknen von kapillaren Suspensionen lassen sich Porositäten von bis zu 60 Vol.-% und Porengrößen von 0,1-100 µm einstellen.

Alternativ oder zusätzlich zum Sekundärbinder kann dem Schlicker eine wasserunlösliche Silicium-Quelle, z.B. ein Silazanharz, zugefügt werden. Bei der Gefriertrocknung verteilt sich der Si-Precursor auf den Porenoberflächen. Bei der Wärmebehandlung kann er mit vorhandenen Kohlenstoffpartikeln zu SiC reagieren und sorgt für eine gleichmäßige Infiltration der Si-Schmelze.

Zusätzlich können dem Schlicker gängige Dispergierhilfsmittel wie etwa Fettsäuren bzw. Carbonsäurederivate, Phosphate, Sulfate, Acrylate, synthetische Polyelektrolyte mit pigmentaffinen Gruppen zur sterischen und/oder elektrosterischen Stabilisierung zugegeben werden, um die Dispersion der Pulverpartikel zu verbessern.

Des Weiteren können Tenside (bevorzugt mit einem HLB-Wert von 3 bis 18) zugegeben werden, um die Stabilität der Suspension zu erhöhen.

Da erfindungsgemäß anstelle von Harzsystemen mit wasserbasierten Systemen gearbeitet wird, ist der Aufwand für persönliche Schutzausrüstung, Absaugungseinrichtungen, etc. in der praktischen Anwendung minimal. Gleiches gilt für die Reinigung und Entsorgung von Verschnitt und Schlickerresten. Durch die vordefinierte Porosität in den Prepregs (anstelle einer dichten Harzmatrix) können Pyrolysefahrten schneller und effizienter durchgeführt werden. Die Porosität in den Prepregs kann durch die Schlickerrezeptur, die Verarbeitungsparameter und die Gefriertrocknung definiert werden, was Vorteile bei späteren Flüssigphasen- bzw. Schmelzinfiltrationen und bei dem Aufbau einer homogenen Matrix bringt. Ferner verläuft die Gefriertrocknung weitgehend schwindungsfrei, was Rissen und anderen Defekten in den Prepregs vorbeugt.

Insbesondere durch die Verwendung des besonderen Schlickers mit den Komponenten i) bis iv) sowie die Verwendung eines Gefriertrocknungsprozesses kann mit dem erfindungsgemäßen Verfahren somit ein Prepreg erhalten werden, dass es ein homogenes, feines, rissfreies Gefüge aufweist und zudem (ohne Abplatzungen) sehr biegsam bzw. flexibel ist.

In der Folge wird mit dem erfindungsgemäßen Verfahren ein einfaches und umweltfreundliches Verfahren zur Herstellung hochporöser Prepregs für die Herstellung faserverstärkter Keramikbauteile angegeben, durch welches stabile, flexible Faserpreformen erhalten werden, die anschließend durch Infiltration so weiterverarbeitet werden können, dass ein dichtes, homogenes keramisches Matrixmaterial erhalten wird, ohne dass die bei der Herstellung des Prepregs erzielte Mikrostruktur durch Faser- oder Kornumverteilung gestört wird.

Eine bevorzugte Variante des erfindungsgemäßen Verfahrens zeichnet sich dadurch aus, dass die anorganischen Feststoffpartikel ausgewählt sind aus der Gruppe bestehend aus Kohlenstoff-Feststoffpartikeln, Metallcarbid-Feststoffpartikeln, Metallnitrid-Feststoffpartikeln, Metallborid-Feststoffpartikeln sowie Mischungen hiervon.

Vorzugsweise beträgt der Anteil der anorganischen Feststoffpartikel bezogen auf das Gesamtvolumen des Schlickers 10 Vol.-% bis 50 Vol.-%, besonders bevorzugt 30 Vol.-% bis 45 Vol.-%.

Gemäß einer weiteren bevorzugten Variante des erfindungsgemäßen Verfahrens ist der mindestens eine wasserlösliche Primärbinder ausgewählt aus der Gruppe bestehend aus Polyvinylalkohol, Polyethylenglycol, Polyvinylbutyral, Acrylaten, Latexbindern sowie Mischungen hiervon.

Vorzugsweise beträgt der Anteil des mindestens einen wasserlöslichen Primärbinders bezogen auf das Gesamtgewicht des Feststoffanteils des Schlickers 0,5 Gew.-% bis 10 Gew.-%.

Eine weitere bevorzugte Variante des erfindungsgemäßen Verfahrens ist dadurch gekennzeichnet, dass der mindestens eine wasserunlösliche Sekundärbinder ausgewählt ist aus der Gruppe bestehend aus Phenolharzen, Furanharzen, Epoxidharzen, Polyesterharzen, sowie Mischungen hiervon, und/oder die mindestens eine wasserunlösliche Siliciumquelle ausgewählt ist aus der Gruppe bestehend aus Silazanharzen, Siloxanen, Silanen sowie Mischungen hiervon.

Vorzugsweise beträgt der Anteil des mindestens einen wasserunlöslichen Sekundärbinders und/oder der mindestens einen wasserunlöslichen Silicium-quelle bezogen auf das Gesamtvolumen des Schlickers weniger als 10 Vol.-%, bevorzugt weniger als 5 Vol.-%. Zudem ist es bevorzugt, dass der Anteil des mindestens einen wasserunlöslichen Sekundärbinders und/oder der mindestens einen wasserunlöslichen Siliciumquelle bezogen auf das Gesamtgewicht des Feststoffanteils des Schlickers 0,1 Gew.-% bis 10 Gew.-% beträgt.

Weiterhin ist es bevorzugt, dass der Anteil des Wassers, d.h. der Komponente iv), bezogen auf das Gesamtvolumen des Schlickers 30 Vol.-% bis 80 Vol.-%, bevorzugt 45 Vol.-% bis 60 Vol.-%, beträgt.

Besonders bevorzugt enthält der Schlicker
- 10 Vol.-% bis 50 Vol.-%, besonders bevorzugt 30 Vol.-% bis 45 Vol.-%, der anorganischen Feststoffpartikel bezogen auf das Gesamtvolumen des Schlickers, und/oder
- 0,5 Gew.-% bis 10 Gew.-% des mindestens einen wasserlöslichen Primärbinders bezogen auf das Gesamtgewicht des Feststoffanteils des Schlickers, und/oder
- 0,1 Gew.-% bis 10 Gew.-% des mindestens einen wasserunlöslichen Sekundärbinders und/oder der mindestens einen wasserunlöslichen Siliciumquelle bezogen auf das Gesamtgewicht des Feststoffanteils des Schlickers, und/oder
- 30 Vol.-% bis 80 Vol.-%, bevorzugt 45 Vol.-% bis 60 Vol.-%, des Wassers, d.h. der Komponente iv), bezogen auf das Gesamtvolumen des Schlickers.

Eine weitere bevorzugte Variante des erfindungsgemäßen Verfahrens zeichnet sich dadurch aus, dass die Faserpreform ein Roving oder ein Textilgewebe, z.B. ein Band, ist, welches eine Faservorzugsrichtung aufweist. In solche Preformen können die Schlicker homogen eindringen, da keine oder nur wenige Kreuzungspunkte vorhanden sind und damit Abschattungen vermieden werden.

Gemäß einer weiteren bevorzugten Variante des erfindungsgemäßen Verfahrens wird bei der Herstellung des Schlickers in Schritt a) zunächst eine Suspension hergestellt, die die Feststoffpartikel, den wasserlöslichen Primärbinder und das Wasser enthält, wobei anschließend der wasserunlösliche Sekundärbinder und/oder die wasserunlösliche Siliciumquelle zu der hergestellten Suspension gegeben wird.

Eine weitere bevorzugte Variante des erfindungsgemäßen Verfahrens ist dadurch gekennzeichnet, dass vor dem Imprägnieren der Faserpreform in Schritt b) die Faserpreform einem Stabilisierungsprozess unterzogen wird, bei welchem zugängliche Porenoberflächen der Faserpreform mittels nasschemischen Methoden (z.B. nasschemischer Beschichtung) oder Gasphasenabscheidung mit einem stabilisierenden Binder belegt werden. Der stabilisierende Binder ist dabei vorzugsweise ausgewählt aus der Gruppe bestehend aus (vorzugsweise vaporisierbaren) Metall-Precursoren, z.B. Silanen, Silazanen, Siloxanen sowie Mischungen hiervon. Auf diese Weise kann das Fasergewebe der Faserpreform schon vor der Infiltration mit dem Schlicker stabilisiert werden. Dadurch entsteht im Nachhinein ein besser handhabbares, stabileres Prepreg.

Gemäß einer weiteren bevorzugten Variante des erfindungsgemäßen Verfahrens, wird nach dem Gefriertrocknungsprozess das hergestellte Prepreg einem Stabilisierungsprozess unterzogen, bei welchem das Prepreg mit mindestens einem Stabilisator, z.B. Paraffinwachs, imprägniert wird. Vorzugsweise erfolgt das Imprägnieren dabei durch Aufsprühen des mindestens einen Stabilisator auf das Prepreg, durch Eintauchen des Prepregs in den mindestens einen Stabilisator oder durch Einrakeln des mindestens einen Stabilisators in das Prepreg. Durch eine solche Behandlung des Prepregs wird eine Verbesserung der Stabilisierung und Biegsamkeit der Faserpreform erreicht. Weitere Verfahrensvorteile sind:
1. Wachse besitzen eine wasserabweisende Wirkung (hydrophob) und schützen daher die poröse Faserpreform nach dem Gefriertrocknen vor erneuter Wasseraufnahme;
2. Die Umformbarkeit Wachs enthaltender Faserpreformen in Pressprozessen bei sehr niedrigen Temperaturen ist hervorragend, da diese schon ab ca. 20 °C knetbar sind;
3. Das thermische Verhalten während der Pyrolyse ist günstig, da keine Zersetzungsprodukte verbleiben (kein Stoffrückstand), der Schmelzpunkt mit 40-70 °C sehr niedrig liegt, und der Verdampfungspunkt bei ca. 300 °C liegt.

Eine weitere bevorzugte Variante des erfindungsgemäßen Verfahrens zeichnet sich dadurch aus, dass nach dem Gefriertrocknungsprozess das hergestellte Prepreg einem Stabilisierungsprozess unterzogen wird, bei welchem zugängliche Porenoberflächen des Prepregs mittels Gasphasenabscheidung mit einem stabilisierenden Binder belegt werden. Vorzugsweise ist der stabilisierende Binder dabei ausgewählt aus der Gruppe bestehend aus (vorzugsweise vaporisierbaren) Metall-Precursoren, z.B. Silanen, Silazanen, Siloxanen sowie Mischungen hiervon. Die monomeren Gasteilchen können die Preformen durchströmen und auf der inneren Oberfläche abgeschieden werden. Dies hat neben der mechanischen Stabilisierung des Prepregs den Vorteil, dass bei der Metallschmelzinfiltration die Benetzung durch die Silizium- oder Legierungsschmelze verbessert wird. Zudem kann dadurch auch die Reaktivität und Reaktionsgeschwindigkeit im Bauteilinnern reduziert werden, wenn es sich bei den anorganischen Matrixanteilen um Kohlenstoffpartikel handelt. Kohlenstoffpartikel wandeln sich im Siliciumkontakt langsamer in SiC um, wenn diese mit einer Diffusionssperre belegt sind.

Eine weitere bevorzugte Variante des erfindungsgemäßen Verfahrens zeichnet sich dadurch aus, dass nach dem Gefriertrocknungsprozess das hergestellte Prepreg einem Stabilisierungsprozess unterzogen wird, bei welchem der wasserunlösliche Sekundärbinder bzw. die wasserunlösliche Siliciumquelle in einem thermischen Härtungsschritt ausgehärtet wird.

Es ist bevorzugt, dass nach dem Gefriertrocknungsprozess das hergestellte Prepreg einem Stabilisierungsprozess unterzogen wird,
- bei welchem das Prepreg mit mindestens einem Stabilisator, z.B. Paraffinwachs, imprägniert wird, wobei das Imprägnieren vorzugsweise durch Aufsprühen des mindestens einen Stabilisator auf das Prepreg, durch Eintauchen des Prepregs in den mindestens einen Stabilisator oder durch Einrakeln des mindestens einen Stabilisators in das Prepreg erfolgt, und/oder
- bei welchem zugängliche Porenoberflächen des Prepregs mittels Gasphasenabscheidung mit einem stabilisierenden Binder belegt werden, wobei der stabilisierende Binder vorzugsweise ausgewählt ist aus der Gruppe bestehend aus (vaporisierbaren) Metall-Precursoren, z.B. Silanen, Silazanen, Siloxanen sowie Mischungen hiervon, und/oder
- bei welchem der wasserunlösliche Sekundärbinder bzw. die wasserunlösliche Siliciumquelle in einem thermischen Härtungsschritt ausgehärtet wird.

Weiterhin ist es bevorzugt, dass nach dem Gefriertrocknungsprozess ein Nachinfiltrieren der Faserpreform mit dem Schlicker erfolgt.

Eine weitere bevorzugte Variante des erfindungsgemäßen Verfahrens ist dadurch gekennzeichnet, dass nach dem Gefriertrocknungsprozess (und vorzugsweise nach einer optionalen Stabilisierung) das hergestellte Prepreg bzw. die hergestellten Prepregs zugeschnitten, perforiert und/oder ausgestanzt (vorzugsweise auf ebenen und gekrümmten Oberflächen) schichtweise abgelegt und mittels Pressen, Autoklaven und/oder Wickeln in eine gewünschte Form gebracht wird bzw. werden. Das schichtweise Ablegen erfolgt dabei vorzugsweise mittels Tapelegen, da hierbei das Ablegen und Zuschneiden in einem Verfahrensschritt erfolgen und die Faserpreformen mit Winkeln von 0° bis 90° abgelegt werden können.

Gemäß einer weiteren bevorzugten Variante des erfindungsgemäßen Verfahrens wird nach dem Gefriertrocknungsprozess das Prepreg bei erhöhter Temperatur ausgelagert, z.B. für 1 Stunde oder länger bei 140 °C bis 220 °C in einem Trockenschrank. Auf diese Weise kann der wasserunlösliche Sekundärbinder, z.B. ein Phenolharz, bzw. eine entsprechend härtbare wasserunlösliche Siliciumquelle aushärten. Die Dauer und Temperatur der Trocknung kann je nach gewünschtem Härtungsgrad variiert werden. Bei einem niedrigen Härtungsgrad sind die Prepreg-Lagen anschließend leichter laminierbar.

Ganz besonders bevorzugt handelt es sich bei dem erfindungsgemäßen Verfahren zur Herstellung von Prepregs um ein Verfahren zur Herstellung von Prepregs für die Herstellung faserverstärkter SiC-Keramikbauteile. In diesem Fall handelt es sich bei den als Komponente i) eingesetzten anorganischen Feststoffpartikeln um Kohlenstoff-haltige Feststoffpartikel, die vorzugsweise ausgewählt sind aus der Gruppe bestehend aus Kohlenstoff-Feststoffpartikeln, Metallcarbid-Feststoffpartikeln, Metallnitrid-Feststoffpartikeln, Metallborid-Feststoffpartikeln und Mischungen hiervon, wobei die Kohlenstoff-haltigen Feststoffpartikel besonders bevorzugt ausgewählt sind aus der Gruppe bestehend aus Kohlenstoff-Feststoffpartikeln, Metallcarbid-Feststoffpartikeln und Mischungen hiervon. Zusätzlich zur den Kohlenstoff-haltigen Feststoffpartikeln kann der Schlicker auch noch weitere Feststoffpartikel, wie z.B. Metallnitrid-Feststoffpartikel und Metallborid-Feststoffpartikel enthalten.

Die vorliegende Erfindung betrifft auch ein Prepreg für die Herstellung faserverstärkter Keramikbauteile, welches nach dem erfindungsgemäßen Verfahren zur Herstellung von Prepregs für die Herstellung faserverstärkter Keramikbauteile herstellbar ist oder mit diesem Verfahren hergestellt wurde.

Das erfindungsgemäße Prepreg unterscheidet sich dadurch von bereits aus dem Stand der Technik bekannten Prepregs, dass er ein homogenes, feines, rissfreies Gefüge aufweist und zudem (ohne Abplatzungen) sehr biegsam ist. Dies ist auf den bei der Herstellung des Prepregs verwendeten Gefriertrocknungsprozess zurückzuführen, da die Gefriertrocknung annähernd schwindungsfrei verläuft.

Das erfindungsgemäße Prepreg ist ohne Abplatzungen biegsam auf Radien von bis zu ≤ 11 mm. Der minimale Biegeradius kann hierbei bestimmt werden, indem das Prepreg in einem Winkel von 90° über verschiedene Zylinderauflagen abgelegt wird, beginnend bei großen Radien hin zu kleinen Radien. Sind Abplatzungen oder Staubbildung zu beobachten, wurde der minimale Biegeradius unterschritten. Eine solche Biegsamkeit ermöglicht die Prepreg-basierte Fertigung von Bauteilkonturen mit vergleichsweisen engen Radien. Die Biegsamkeit kann durch eine nachgeschobene Härtung des Phenolharzes noch erhöht werden.

Im Weiteren betrifft die vorliegende Erfindung auch ein Verfahren zur Herstellung faserverstärkter Keramikbauteile, bei welchem ein mit dem erfindungsgemäßen Verfahren zur Herstellung von Prepregs für die Herstellung faserverstärkter Keramikbauteile hergestelltes Prepreg (bzw. ein daraus gefügtes und/oder laminiertes Grünbauteil) mit Siliciumschmelze infiltriert wird. Bei Verwendung von Kohlenstoff-haltigen Feststoffpartikeln als anorganische Feststoffpartikel, d.h. als Komponente i), entsteht hierbei aus dem Kohlenstoff und dem infiltrierten Silicium Siliciumcarbid (SiC). Es entsteht in diesem Fall ein dichter, SiC-faserverstärkter Verbundkörper mit einem feinskaligen SiSiC-Matrixgefüge mit hoher Festigkeit sowie einer hohen Schadenstoleranz, wenn beschichtete Fasern enthalten sind.

Das homogene, feine, rissfreie Gefüge des hergestellten Prepregs wird durch die Flüssigphasensilizierung zum Teil stark überprägt. In dem konkurrierenden Verfahren der wiederholten Infiltration und Pyrolyse von Harzen ("PIP" = polymer infiltration and pyrolysis, mit anschließender Flüssigsilizierung) entstehen nach jedem Pyrolysevorgang Schwindungsrisse, wodurch i.d.R. ein stark mikrorissbehaftetes Netzwerk entsteht, was bei der Gefriertrocknung nicht der Fall ist. Auch sind Abschattungseffekte bei der Polymerinfiltration ein Problem, wodurch geschlossene Poren entstehen. Bei der chemischen Gasphasenabscheidung von SiC zum Matrixaufbau verbleiben oft geschlossene Poren im Werkstoff, wenn sich Bereiche zusetzen. Diese geschlossenen Poren existieren bei der Gefriertrocknungs-Route bei geeigneter Durchführung ebenfalls nicht.

Eine bevorzugte Variante des erfindungsgemäßen Verfahrens zur Herstellung faserverstärkter Keramikbauteile ist dadurch gekennzeichnet, dass vor dem Infiltrieren des Prepregs mit Siliciumschmelze das Prepreg einem Pyrolysierungsprozess unterzogen wird.

Auf Grund des geringen Binderanteils und der damit sehr kleinen Formänderung kann aber auch auf die Pyrolyse verzichtet werden, so dass sich ein dreistufiges Verfahren, bestehend aus Grünfertigung-Gefriertrocknen-Silizierung, ergibt.

Ganz besonders bevorzugt handelt es sich bei dem erfindungsgemäßen Verfahren zur Herstellung faserverstärkter Keramikbauteile um ein Verfahren zur Herstellung faserverstärkter SiC-Keramikbauteile. In diesem Fall handelt es sich bei den als Komponente i) eingesetzten anorganischen Feststoffpartikeln um Kohlenstoff-haltige Feststoffpartikel, die vorzugsweise ausgewählt sind aus der Gruppe bestehend aus Kohlenstoff-Feststoffpartikeln, Metallcarbid-Feststoffpartikeln und Mischungen hiervon.

Das mit dem erfindungsgemäßen Verfahren hergestellte faserverstärkte Keramikbauteil unterscheidet sich dadurch von bereits aus dem Stand der Technik bekannten faserverstärkten Keramikbauteilen, dass es neben dem ausgeprägten schadenstoleranten Bruchverhalten ein homogenes, feines, rissfreies Gefüge mit einer hohen Festigkeit aufweist. Dies ist auf den bei der Herstellung des Keramikbauteils bzw. des Prepregs verwendeten Gefriertrocknungsprozess zurückzuführen, da die Gefriertrocknung annähernd schwindungsfrei verläuft. Durch die Verwendung und Laminieren bzw. Fügen (optional vorgeformter) flexibler Prepregs können auch komplexe, nicht direkt zugängliche Geometrien z.B. mit engen Radien realisiert werden.

Weiterhin wird die Verwendung des mit dem erfindungsgemäßen Verfahren hergestellten faserverstärkten Keramikbauteils als CMC-Hochtemperaturbauteil für Gasturbinen, für Ofenanlagen, in der Hochtemperaturanlagentechnik, für Müllverbrennungsanlagen, in der Kraftwerks- und Kernfusionstechnik, als Motorenbauteile, z.B. als Motorenlager, für Solarreceiver, und/oder in der Luft- und Raumfahrtechnik, z.B. in der Satellitentechnik, beschrieben.

Anhand des nachfolgenden Beispiels und der Figur soll die vorliegende Erfindung näher erläutert werden, ohne diese auf die hier gezeigten spezifischen Ausführungsformen und Parameter zu beschränken.

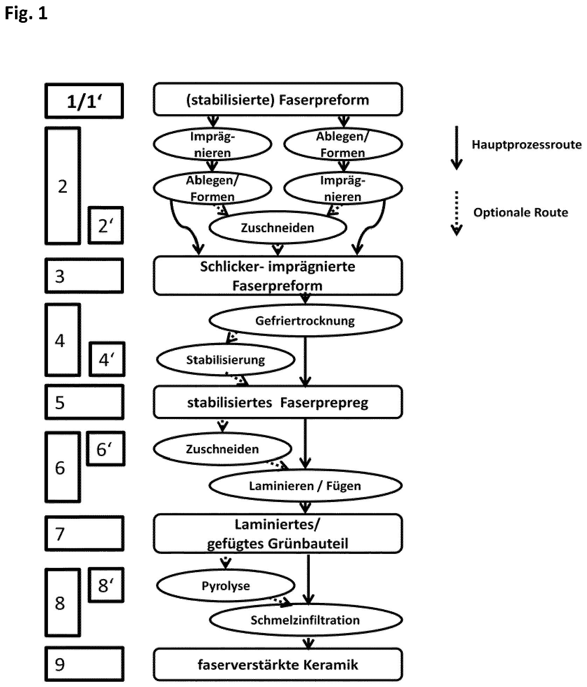

In Fig. 1 ist das Prozesschema verschiedener Prozessrouten beispielhafter Ausführungsvarianten des erfindungsgemäßen Verfahrens in Form eines Flussdiagramms dargestellt.

Die im Flussdiagramm verwendeten Bezugszeichen bezeichnen dabei Prozessschritte oder Zeitpunkte des Prozesses und werden im Folgenden erläutert.
1 - Als Ausgangsmaterial dient eine bevorzugt mit einer Faserbeschichtung versehene Faserpreform (Faserroving, 2D/2,5D/3D-Gewebe, Tape, etc.).
2 - Die Faserpreform wird mit Schlicker imprägniert und dann abgelegt bzw. mehrere Preformeinheiten derartig gestapelt. Umgekehrt kann auch zuerst die Faserpreform abgelegt und anschließend imprägniert werden. Die Vorgehensweisen können auch abgewechselt oder anderweitig kombiniert werden.
2' - Optional können die imprägnierten Preformen teilweise oder komplett zugeschnitten und/oder perforiert und/oder ausgestanzt werden.
3 - Es liegt eine mit Schlicker imprägnierte, ggf. zugeschnittene Faserpreform vor.
4 - Die imprägnierte Faserpreform wird einem Gefriertrocknungsprozess unterzogen, in welchem das Wasser des Schlickers schwindungsfrei entfernt wird. Hierdurch entsteht ein stabiles Faserprepreg.
4'-Optional kann die gefriergetrocknete imprägnierte Faserpreform durch thermisches Härten eines vernetzbaren wasserunlöslichen Sekundärbinders bzw. einer vernetzbaren wasserunlöslichen Siliziumquelle, durch Abscheiden einer stabilisierenden Komponente über die Gasphase, oder durch Imprägnieren mit einem flüssigen Stabilisator wie z.B. Paraffinwachs.
5 - Es liegt ein stabiles, ggf. zusätzlich stabilisiertes, flexibles Prepreg vor.
6 - Durch Laminieren, Wickeln, Pressen, Autoklavieren und/oder Fügen der Prepregs, bzw. durch beliebige Kombinationen hiervon, entsteht ein Grünbauteil.
6' - Optional können die Prepregs nochmals zugeschnitten und/oder perforiert und/oder ausgestanzt werden, sofern dies noch nicht in Schritt 2' geschehen ist, oder der Zuschnitt im Rahmen der Endbearbeitung geschieht.
7 - Es liegt ein endkonturnah gefertigtes, laminiertes, ggf. gefügtes Grünbauteil vor.
8 - Das Grünbauteil wird in einem Ofenprozess mit einer Metallschmelze, bevorzugt Siliziumschmelze infiltriert, wodurch ein Bauteil aus dichter, faserverstärkter Keramik (z.B. SiC-Faser-verstärkem SiSiC mit minimalem Gehalt an Rest-Silizium) entsteht.
8' - Optional, jedoch bevorzugt wird das zu infiltrierende Grünbauteil vor der Schmelzinfiltration einem definierten Pyrolyseprozess unterzogen, um Organik zu entfernen und Kohlenstoff abzuscheiden.
9 - Es liegt ein Bauteil aus faserverstärkter Keramik vor, welches optional endbearbeitet wird.

### Ausführungsbeispiel

In einem 75 ml-Kunststoffbecher für den Speedmixer VAC 1100.1 (Fa. Hauschild) werden 29,0 g vollentsalztes Wasser und 1,0 g Phenolharz (PF0433, Fa. Hexion) vorgelegt. Hiernach werden 20,0 g Kohlenstoffpulver (Luvomaxx MT N991, Lehmann&Voss&Co.) zugegeben, und dieses mit einem Spatel vorhomogenisiert. Darauf werden 20,5 g 3 mm Zirkonoxid-Mahlperlen zugegeben, und das Gemisch in dem Speedmixer über 1,5 min. bei 1750 rpm behandelt. Hiernach werden 0,5 g 20%-ige PVA-Lösung (Mowiol 4-88, Fa. Kuraray) und 1,50 g Glyzerin zugegeben, und das Gemisch erneut 1,5 min. bei 1750 rpm behandelt.

Die Mahlperlen werden mit einem 1 mm-Sieb abgetrennt. Es werden unidirektionale Tapes aus Kohlenstofffasern zu ca. 15 cm langen Bahnen zurechtgeschnitten, und an den Stirnseiten auf einer Aluminium-Trägerfolie mit Klebeband vorfixiert. Mit einem Gummischaber wird der Schlicker in das UD-Tape eingestrichen, sodass die Fasern gerade bedeckt sind. Danach wird das Klebeband vorsichtig gelöst, eine weitere Aluminium-Trägerfolie aufgestrichen, der Aufbau gewendet, die vormals unten liegende Aluminiumfolie abgezogen, und die Unterseite des UD-Tape mit dem Schlicker eben bestrichen. Das so infiltrierte UD-Tape wird in einer Gefriertruhe bei -43 °C auf eine ebene Fläche gestellt, und mind. 1 h eingefroren.

Hiernach wird das Tape entnommen, unter Vermeidung des Auftauens in einen Gefriertrockner transferiert, und über mind. 24 h bei 2,8*10-3 mbar und - 56 °C gefriergetrocknet. Das gefriergetrocknete Prepreg wird hiernach langsam auf Raumtemperatur gebracht, und hiernach in einem Trockenschrank platziert, um das Phenolharz auszuhärten. Je nach gewünschtem Härtungsgrad wird das Prepreg über mind. 2 h bei 150 - 200 °C im Trockenschrank gelagert. Bei einem niedrigen Härtungsgrad sind die Prepreg-Lagen anschließend leichter laminierbar.

Das so erhaltene Prepreg bzw. daraus hergestellte, laminierte Bauteile können anschließend mit Siliciumschmelze infiltriert werden, wodurch faserverstärkte SiC-Keramikbauteile erhalten werden.

## Patentansprüche

1. Verfahren zur Herstellung von Prepregs für die Herstellung faserverstärkter Keramikbauteile, bei welchem
a) ein Schlicker hergestellt wird, welcher
i) anorganische Feststoffpartikel,
ii) mindestens einen wasserlöslichen Primärbinder,
iii) mindestens einen wasserunlöslichen Sekundärbinder und/oder mindestens eine wasserunlösliche Siliciumquelle, und
iv) Wasser
enthält, wobei die anorganischen Feststoffpartikel mit dem mindestens einen wasserunlöslichen Sekundärbinder und/oder der mindestens einen wasserunlöslichen Siliciumquelle ein Gelnetzwerk ausbilden,
b) eine Faserpreform mit dem hergestellten Schlicker imprägniert wird, und
c) die mit dem Schlicker imprägnierte Faserpreform einem Gefriertrocknungsprozess unterzogen wird.

2. Verfahren gemäß dem vorhergehenden Anspruch, **dadurch gekennzeichnet, dass** die anorganischen Feststoffpartikel ausgewählt sind aus der Gruppe bestehend aus Kohlenstoff-Feststoffpartikeln, Metallcarbid-Feststoffpartikeln, Metallnitrid-Feststoffpartikeln, Metallborid-Feststoffpartikeln sowie Mischungen hiervon.

3. Verfahren gemäß einem der vorhergehenden Ansprüche, **dadurch gekennzeichnet, dass** der mindestens eine wasserlösliche Primärbinder ausgewählt ist aus der Gruppe bestehend aus Polyvinylalkohol, Polyethylenglycol, Polyvinylbutyral, Acrylaten, Latexbindern sowie Mischungen hiervon.

4. Verfahren gemäß einem der vorhergehenden Ansprüche, **dadurch gekennzeichnet, dass** der mindestens eine wasserunlösliche Sekundärbinder ausgewählt ist aus der Gruppe bestehend aus Phenolharzen, Furanharzen, Epoxidharzen, Polyesterharzen, sowie Mischungen hiervon, und/oder die mindestens eine wasserunlösliche Siliciumquelle ausgewählt ist aus der Gruppe bestehend aus Silazanharzen, Siloxanen, Silanen sowie Mischungen hiervon.

5. Verfahren gemäß einem der vorhergehenden Ansprüche, **dadurch gekennzeichnet, dass** der Anteil des mindestens einen wasserunlöslichen Sekundärbinders und/oder der mindestens einen wasserunlöslichen Siliciumquelle bezogen auf das Gesamtvolumen des Schlickers weniger als 10 Vol.-%, bevorzugt weniger als 5 Vol.-%, beträgt.

6. Verfahren gemäß einem der vorhergehenden Ansprüche, **dadurch gekennzeichnet, dass** die Faserpreform ein Roving oder ein Textilgewebe, z.B. ein Band, ist, welches eine Faservorzugsrichtung aufweist.

7. Verfahren gemäß einem der vorhergehenden Ansprüche, **dadurch gekennzeichnet, dass** bei der Herstellung des Schlickers in Schritt a) zunächst eine Suspension hergestellt wird, die die Feststoffpartikel, den wasserlöslichen Primärbinder und das Wasser enthält und anschließend der wasserunlösliche Sekundärbinder und/oder die wasserunlösliche Siliciumquelle zu der hergestellten Suspension gegeben wird.

8. Verfahren gemäß einem der vorhergehenden Ansprüche, **dadurch gekennzeichnet, dass** vor dem Imprägnieren der Faserpreform in Schritt b) die Faserpreform einem Stabilisierungsprozess unterzogen wird, bei welchem zugängliche Porenoberflächen der Faserpreform mittels nasschemischer Beschichtung oder Gasphasenabscheidung mit einem stabilisierenden Binder belegt werden, wobei der stabilisierende Binder vorzugsweise ausgewählt ist aus der Gruppe bestehend aus (vaporisierbaren) Metall-Precursoren, z.B. Silanen, Silazanen, Siloxanen sowie Mischungen hiervon.

9. Verfahren gemäß einem der vorhergehenden Ansprüche, **dadurch gekennzeichnet, dass** nach dem Gefriertrocknungsprozess das hergestellte Prepreg einem Stabilisierungsprozess unterzogen wird,
- bei welchem das Prepreg mit mindestens einem Stabilisator, z.B. Paraffinwachs, imprägniert wird, wobei das Imprägnieren vorzugsweise durch Aufsprühen des mindestens einen Stabilisator auf das Prepreg, durch Eintauchen des Prepregs in den mindestens einen Stabilisator oder durch Einrakeln des mindestens einen Stabilisators in das Prepreg erfolgt, und/oder
- bei welchem zugängliche Porenoberflächen des Prepregs mittels Gasphasenabscheidung mit einem stabilisierenden Binder belegt werden, wobei der stabilisierende Binder vorzugsweise ausgewählt ist aus der Gruppe bestehend aus (vaporisierbaren) Metall-Precursoren, z.B. Silanen, Silazanen, Siloxanen sowie Mischungen hiervon.

10. Verfahren gemäß einem der vorhergehenden Ansprüche, **dadurch gekennzeichnet, dass** nach dem Gefriertrocknungsprozess das hergestellte Prepreg zugeschnitten, schichtweise abgelegt und mittels Pressen, Autoklaven und/oder Wickeln in eine gewünschte Form gebracht wird, wobei das schichtweise Ablegen vorzugsweise mittels Tapelegen erfolgt.

11. Prepreg für die Herstellung faserverstärkter Keramikbauteile, hergestellt nach einem Verfahren gemäß einem der vorhergehenden Ansprüche, wobei das Prepreg ohne Abplatzungen biegsam auf Radien von bis zu ≤ 11 mm ist, was bestimmt wird, indem das Prepreg in einem Winkel von 90° über verschiedene Zylinderauflagen abgelegt wird, beginnend bei großen Radien hin zu kleinen Radien.

12. Verfahren zur Herstellung faserverstärkter Keramikbauteile, bei welchem ein Prepreg gemäß Anspruch 11 mit Siliciumschmelze infiltriert wird.

13. Verfahren gemäß Anspruch 12, **dadurch gekennzeichnet, dass** vor dem Infiltrieren des Prepregs mit Siliciumschmelze das Prepreg einem Pyrolysierungsprozess unterzogen wird.

## Claims

1. Method for producing prepregs for the production of fiber-reinforced ceramic components, in which
a) a slurry is produced which contains
i) inorganic solid particles,
ii) at least one water-soluble primary binder,
iii) at least one water-insoluble secondary binder and/or at least one water-insoluble silicon source, and
iv) water,
wherein the inorganic solid particles form a gel network with the at least one water-insoluble secondary binder and/or the at least one water-insoluble silicon source,
b) a fiber preform is impregnated with the produced slurry, and
c) the fiber preform impregnated with the slurry is subjected to a freeze-drying process.

2. Method according to the preceding claim, **characterized in that** the inorganic solid particles are selected from the group consisting of carbon solid particles, metal carbide solid particles, metal nitride solid particles, metal boride solid particles, as well as mixtures thereof.

3. Method according to any one of the preceding claims, **characterized in that** the at least one water-soluble primary binder is selected from the group consisting of polyvinyl alcohol, polyethylene glycol, polyvinyl butyral, acrylates, latex binders, as well as mixtures thereof.

4. Method according to any one of the preceding claims, **characterized in that** the at least one water-insoluble secondary binder is selected from the group consisting of phenolic resins, furan resins, epoxy resins, polyester resins, as well as mixtures thereof, and/or the at least one water-insoluble silicon source is selected from the group consisting of silazane resins, siloxanes, silanes, as well as mixtures thereof.

5. Method according to any one of the preceding claims, **characterized in that** the proportion of the at least one water-insoluble secondary binder and/or the at least one water-insoluble silicon source is less than 10 vol.%, preferably less than 5 vol.%, based on the total volume of the slurry.

6. Method according to any one of the preceding claims, **characterized in that** the fiber preform is a roving or a textile fabric, e.g. a tape, which has a preferred fiber direction.

7. Method according to any one of the preceding claims, **characterized in that** during the production of the slurry in step a) firstly a suspension is produced which contains the solid particles, the water-soluble primary binder and the water, and then the water-insoluble secondary binder and/or the water-insoluble silicon source is added to the suspension produced.

8. Method according to any one of the preceding claims, **characterized in that** prior to the impregnation of the fiber preform in step b) the fiber preform is subjected to a stabilization process in which accessible pore surfaces of the fiber preform are coated with a stabilizing binder by means of wet-chemical coating or gas-phase deposition, wherein the stabilizing binder is preferably selected from the group consisting of (vaporizable) metal precursors, e.g. silanes, silazanes, siloxanes, as well as mixtures thereof.

9. Method according to any one of the preceding claims, **characterized in that** after the freeze-drying process the prepreg produced is subjected to a stabilization process
- in which the prepreg is impregnated with at least one stabilizer, e.g. paraffin wax, wherein the impregnation is preferably carried out by spraying the at least one stabilizer onto the prepreg, by dipping the prepreg into the at least one stabilizer or by squeegeeing the at least one stabilizer into the prepreg, and/or
- in which accessible pore surfaces of the prepreg are coated with a stabilizing binder by means of gas-phase deposition, the stabilizing binder preferably being selected from the group consisting of (vaporizable) metal precursors, e.g. silanes, silazanes, siloxanes, as well as mixtures thereof.

10. Method according to any one of the preceding claims, **characterized in that** after the freeze-drying process the produced prepreg is cut to size, deposited in layers and brought into the desired shape by pressing, autoclaving and/or winding, the layer-by-layer deposition preferably being carried out by means of tape layering.

11. Prepreg for the production of fiber-reinforced ceramic components, produced by a method according to any one of the preceding claims, wherein the prepreg is bendable without spalling to radii of up to ≤ 11 mm, which is determined by laying the prepreg at an angle of 90° over various cylinder supports, starting with large radii and moving to small radii.

12. Method for producing fiber-reinforced ceramic components, in which a prepreg according to claim 11 is infiltrated with silicon melt.

13. Method according to claim 12, **characterized in that** the prepreg is subjected to a pyrolysis process before the infiltration of the prepreg with silicon melt.

## Revendications

1. Procédé de fabrication de préimprégnés pour la fabrication de composants céramiques renforcés par des fibres, dans lequel
a) une barbotine est produite, qui contient
i) des particules solides inorganiques,
ii) au moins un liant primaire soluble dans l'eau,
iii) au moins un liant secondaire insoluble dans l'eau et/ou au moins une source de silicium insoluble dans l'eau, et
iv) de l'eau
dans lequel les particules solides inorganiques formant un réseau de gel avec l'au moins un liant secondaire insoluble dans l'eau et/ou l'au moins une source de silicium insoluble dans l'eau,
b) une préforme fibreuse est imprégnée de la barbotine produite, et
c) la préforme fibreuse imprégnée de la barbotine est soumise à un processus de lyophilisation.

2. Procédé selon la revendication précédente, **caractérisé en ce que** les particules solides inorganiques sont choisies dans le groupe constitué de particules solides de carbone, de particules solides de carbure métallique, de particules solides de nitrure métallique, de particules solides de borure métallique et de mélanges de celles-ci.

3. Procédé selon l'une quelconque des revendications précédentes, **caractérisé en ce que** le au moins un liant primaire soluble dans l'eau est choisi dans le groupe constitué de l'alcool polyvinylique, du polyéthylène glycol, du polyvinylbutyral, d'acrylates, de liants de latex et de mélanges de ceux-ci.

4. Procédé selon l'une quelconque des revendications précédentes, **caractérisé en ce que** le au moins un liant secondaire insoluble dans l'eau est choisi dans le groupe constitué de résines phénoliques, de résines de furanne, de résines époxy, de résines de polyester, ainsi que de mélanges de celles-ci, et/ou la au moins une source de silicium insoluble dans l'eau est choisie dans le groupe constitué de résines de silazane, de siloxanes, de silanes et de mélanges de ceux-ci.

5. Procédé selon l'une quelconque des revendications précédentes, **caractérisé en ce que** la proportion dudit au moins un liant secondaire insoluble dans l'eau et/ou de ladite au moins une source de silicium insoluble dans l'eau par rapport au volume total de la barbotine est inférieure à 10 % en volume, de préférence inférieure à 5 % en volume.

6. Procédé selon l'une quelconque des revendications précédentes, **caractérisé en ce que** le préformage de fibres est une mèche ou un tissu textile, par exemple un ruban, qui présente une direction préférentielle pour les fibres.

7. Procédé selon l'une quelconque des revendications précédentes, **caractérisé en ce que** lors de la préparation de la barbotine à l'étape a), dans un premier temps une suspension qui contient les particules solides, le liant primaire soluble dans l'eau et l'eau est préparée, puis le liant secondaire insoluble dans l'eau et/ou la source de silicium insoluble dans l'eau sont ajoutés à la suspension préparée.

8. Procédé selon l'une quelconque des revendications précédentes, **caractérisé en ce que**, avant l'imprégnation de la préforme fibreuse à l'étape b), la préforme fibreuse est soumise à un processus de stabilisation au cours duquel des surfaces poreuses accessibles de la préforme fibreuse sont revêtues d'un liant stabilisant au moyen d'une application en revêtement par voie chimique humide ou d'un dépôt en phase gazeuse, dans lequel le liant stabilisant est de préférence choisi dans le groupe constitué de précurseurs métalliques (vaporisables), par exemple des silanes, des silazanes, des siloxanes ainsi que des mélanges de ceux-ci.

9. Procédé selon l'une quelconque des revendications précédentes, **caractérisé en ce que**, après le processus de lyophilisation, le préimprégné produit est soumis à un processus de stabilisation,
- dans lequel le préimprégné est imprégné d'au moins un stabilisant, par exemple de la cire de paraffine, dans lequel l'imprégnation s'effectue de préférence par pulvérisation du au moins un stabilisant sur le préimprégné, par immersion du préimprégné dans le au moins un stabilisant ou par introduction à la racle du au moins un stabilisant dans le préimprégné, et/ou
- dans lequel les surfaces poreuses accessibles du préimprégné sont revêtues d'un liant stabilisant par dépôt en phase gazeuse, dans lequel le liant stabilisant est de préférence choisi dans le groupe constitué de précurseurs métalliques (vaporisables), par exemple des silanes, des silazanes, des siloxanes ainsi que des mélanges de ceux-ci.

10. Procédé selon l'une quelconque des revendications précédentes, **caractérisé en ce que**, après le processus de lyophilisation, le préimprégné produit est découpé, déposé couche par couche et amené dans une forme souhaitée au moyen de presses, d'autoclaves et/ou d'enroulements, dans lequel le dépôt couche par couche s'effectue de préférence au moyen d'un pose de ruban.

11. Préimprégné pour la fabrication de composants de céramique renforcés par des fibres, fabriqué selon un procédé selon l'une quelconque des revendications précédentes, dans lequel le préimprégné est flexible sans écaillage à des rayons allant jusqu'à ≤ 11 mm, ce qui est déterminé en déposant le préimprégné à un angle de 90° sur différents supports cylindriques, en commençant par de grands rayons jusqu'à de petits rayons.

12. Procédé de fabrication de composants céramiques renforcés de fibres, dans lequel du silicium fondu est infiltré dans un préimprégné selon la revendication 11.

13. Procédé selon la revendication 12, **caractérisé en ce qu'**avant l'infiltration du préimprégné avec du silicium fondu, le préimprégné est soumis à un processus de pyrolyse.
